Europäisches Patentamt

European Patent Office

Office européen des brevets

(19)

(11) EP 0 653 030 B1

(12) **EUROPÄISCHE PATENTSCHRIFT**

(45) Veröffentlichungstag und Bekanntmachung des Hinweises auf die Patenterteilung:
**02.07.1997 Patentblatt 1997/27**

(21) Anmeldenummer: **94915069.2**

(22) Anmeldetag: **20.04.1994**

(51) Int Cl.6: **F16J 15/18**, F16K 41/02

(86) Internationale Anmeldenummer:
**PCT/EP94/01217**

(87) Internationale Veröffentlichungsnummer:
**WO 94/28336 (08.12.1994 Gazette 1994/27)**

(54) **VERFAHREN UND VORRICHTUNG ZUM KONTROLLIERTEN VERSPANNEN VON STOPFBUCHS- ODER DICHTUNGSPACKUNGEN**

PROCESS AND DEVICE FOR THE CONTROLLED COMPRESSION OF STUFFING BOX OR SEAL PACKINGS

PROCEDE ET DISPOSITIF PERMETTANT DE COMPRIMER DES GARNITURES DE PRESSE-ETOUPES OU D'ETANCHEITE

(84) Benannte Vertragsstaaten:
**AT BE CH DE DK ES FR GB GR IE IT LI LU NL PT SE**

(30) Priorität: **01.06.1993 DE 4318157**

(43) Veröffentlichungstag der Anmeldung:
**17.05.1995 Patentblatt 1995/20**

(73) Patentinhaber: **Amtec Advanced Measurement Messtechnischer Service GmbH D-70771 Leinfelden-Echterdingen (DE)**

(72) Erfinder: **SCHÖCKLE, Friedrich D-70190 Stuttgart (DE)**

(74) Vertreter: **Wolf, Eckhard, Dr.-Ing. et al Patentanwälte Wolf & Lutz Hauptmannsreute 93 70193 Stuttgart (DE)**

**Beschreibung**

Die Erfindung betrifft ein Verfahren und eine Vorrichtung zum kontrollierten Verspannen einer in einer einseitig offenen, durch einen Kammerboden und eine vorzugsweise zylindrische Kammerwandung begrenzten, vorzugsweise von einer Spindel axial durchdrungenen Kammer angeordneten, von der Öffnungsseite her in Richtung Kammerboden mit einer axialen Preßkraft beaufschlagbaren und dabei entlang einem Spannweg komprimierbaren und gegen den Kammerboden, die Kammerwandung und gegebenenfalls die Spindeloberfläche dichtend andrückbaren Stopfbuchs- oder Dichtungspackung.

Stopfbuchsen dienen zur Abdichtung von gegenseitig beweglichen Teilen in Armaturen und dergleichen. Sie bestehen im wesentlichen aus einer in einem Gehäuse angeordneten Stopfbuchskammer, einer durch die Stopfbuchskammer hindurchgreifenden Spindel oder einem Stößel, einer in der Kammer angeordneten Stopfbuchspackung und einer Stopfbuchsbrille als Druckstück, mit der die Stopfbuchspackung in der Stopfbuchskammer verspannt wird. Die Stopfbuchsbrille wird üblicherweise gegenüber der gehäusefesten Kammer achsparallel mittels Spann- oder Brillenschrauben verspannt. Durch die beim axialen Verspannen auf die Packung ausgeübte Preßkraft wird gleichzeitig eine Radialverspannung und damit eine radiale Dichtkraft zwischen Stopfbuchse und der beweglichen Spindel erzeugt. Die Verspannung muß dabei so eingestellt werden, daß die Spindel bzw. der Stößel noch beweglich bleibt, daß andererseits aber die Dichtwirkung bei allen Betriebszuständen erhalten bleibt. Die Preßkraft wird daher sowohl nach oben als auch nach unten innerhalb eines Toleranzbandes begrenzt.

Beim Verspannen von Stopfbuchspackungen wurde bisher meist empirisch vorgegangen. Dabei gingen die Monteure von Erfahrungswerten aus, die beispielsweise darin bestanden, daß ein bestimmtes Stopfbuchsmaterial um einen vorgegebenen Prozentsatz verpreßt werden muß, um die gewünschten Eigenschaften zu erhalten. Diese Erfahrungswerte sind jedoch materialabhängig, so daß ein auf Asbest als Stopfbuchsmaterial eingestellter Monteur seine Erfahrung nicht ohne weiteres auf ein anderes Dichtmaterial, wie PTFE-Seide, Graphit oder Graphitfasern, übertragen kann. Auch die Konsistenz des Packungsmaterials, insbesondere wenn es von verschiedenen Herstellern kommt, ist nicht immer gleich und hat einen Einfluß auf die genannten Erfahrungswerte.

Ausgehend hiervon liegt der Erfindung die Aufgabe zugrunde, ein Verfahren und eine Vorrichtung der eingangs angegebenen Art zu entwickeln, womit ein definiertes und reproduzierbares Verspannen des Packungsmaterials in Stopfbuchsen und gekammerten Dichtungen erzielt werden kann.

Zur Lösung dieser Aufgabe werden die in den Ansprüchen 1 bzw. 8 angegebenen Merkmalskombinationen vorgeschlagen. Weitere vorteilhafte Ausgestaltungen und Weiterbildungen der Erfindung ergeben sich aus den abhängigen Ansprüchen.

Der erfindungsgemäßen Lösung liegt vor allem der Gedanke zugrunde, daß die Packung zunächst zur Erstverdichtung mit einer vorgegebenen Maximalpreßkraft beaufschlagt wird, bei der plastische Verformungen auftreten, die zu einer ausreichenden Vorpressung führen. Diese Maximalpreßkraft kann auch so hoch sein, daß sich im Falle einer Stopfbuchse die Spindel nicht mehr bewegen läßt. Die Spindelbewegung spielt bei der Vorpressung noch keine Rolle. Um Setzerscheinungen bei der Erstverdichtung möglichst rasch abklingen zu lassen, wird die Maximalpreßkraft bei der Erstverdichtung während einer vorgegebenen Haltezeit, die beispielsweise einige Minuten betragen kann, aufrechterhalten. Im Anschluß daran wird die Preßkraft mehrfach zwischen der Maximalpreßkraft und einer vorgegebenen Minimalpreßkraft, die auch Null sein kann, variiert. Während der Variation der Preßkraft wird der zugehörige Spannweg der Packung gemessen und registriert. Abschließend wird die Packung unter einer vorgegebenen Nennpreßkraft, die kleiner als die Maximal- und größer als die Minimalpreßkraft ist und die durch Kompression der Packung auf dem zugehörigen Spannweg eingestellt wird, komprimiert und in diesem Zustand in der Kammer eingespannt.

Um Ungenauigkeiten in der Einstellung der Nennpreßkraft durch Hystereseerscheinungen zu vermeiden, ist es vorteilhaft, wenn die Nennpreßkraft durch Erhöhen der Preßkraft von der Minimalpreßkraft aus eingestellt wird.

Als Minimalpreßkraft wird zweckmäßig die Preßkraft Null gewählt, während die Maximalpreßkraft beim 1,3- bis 2,5-fachen, vorzugsweise beim 1,5- bis 2-fachen der einzustellenden Nennpreßkraft gewählt wird.

Eine bevorzugte Ausgestaltung der Erfindung sieht vor, daß während der Variation der Preßkraft die Preßkraft und der zugehörige Spannweg der Packung unter Bildung eines Kraft-Weg-Diagramms als Eichkurve registriert wird, und daß die Nennpreßkraft anhand der Eichkurve eingestellt wird. Um Fehler aufgrund von Hystereseeffekten auszuschließen, wird der Spannweg bei zunehmender Kompression der Packung auf den der Nennpreßkraft entsprechenden Wert eingestellt. Für die meßtechnische Erfassung wird die Preßkraft zweckmäßig mit hydraulischen Mitteln auf die Packung ausgeübt und gemessen.

Bei einer Vorrichtung zur Durchführung des erfindungsgemäßen Verfahrens, bei der die Packung in einer einseitig offenen, durch einen Kammerboden und eine vorzugsweise zylindrische Kammerwandung begrenzten, vorzugsweise von einer Spindel axial durchsetzten Kammer angeordnet und von der Öffnungsseite her mittels eines Druckstücks mit einer axialen Preßkraft beaufschlagbar und dabei entlang einem Spannweg komprimierbar und gegen das Kammerinnere und gegebenenfalls die Spindeloberfläche dichtend andrückbar ist, wird gemäß der Erfindung vorgeschlagen, daß das Druckstück gegenüber dem kammerseitigen Gehäuse mit zeitweilig ankoppelbaren mechanischen oder hydraulischen Mitteln unter Aufbau einer Preßkraft in der Packung verschiebbar ist, daß ein Druck- oder Kraftsensor zur Bestimmung der Preßkraft und ein Wegaufnehmer zur Bestimmung des Spannwegs des Druckstücks gegenüber dem Kammergehäuse vorgesehen ist, und daß der Druck- oder Kraftsensor und der Wegaufnehmer ausgangsseitig an eine Auswerteschaltung zur Bildung eines Kraft-Weg-Diagramms als Eichkurve für die Einstellung einer Nennpreßkraft über den Spannweg des Druckstücks angeschlossen sind. Das Druckstück ist dabei zweckmäßig mittels mindestens zweier zwischen Druckstück und kammerseitigem Gehäuse angeordneter Spannorgane mit der Preßkraft beaufschlagbar, wobei die mechanischen oder hydraulischen Mittel an die Spannorgane ankoppelbar sind.

Gemäß einer vorteilhaften Ausgestaltung der Erfindung weisen die hydraulischen Mittel je eine auf die freien Enden der Spannschrauben aufschiebbare, gegen das Druckstück anpreßbare Spannhülse und einen mit der Spannschraube lösbar verbindbaren, in eine mit Drucköl beaufschlagbare Druckkammer der Spannhülse druckdicht eingreifenden Kolben auf. Zur Einstellung der Nennpreßkraft tragen die gehäusefesten Spannschrauben vorzugsweise motorisch gegen das Druckstück andrehbare Spannmuttern, wobei die Spannhülsen für den anfänglichen Meßvorgang entweder anstelle der Spannmuttern oder mit aufgesetzten Spannmuttern auf die Spannschrauben aufschiebbar und gegen das Druckstück anpreßbar sind.

Im Falle einer Stopfbuchse ist das Druckstück als Stopfbuchsbrille mit einem zentralen Durchbruch für die Spindel und mit weiteren Durchbrüchen für die Spannschrauben ausgebildet.

Um eine möglichst einfache und übersichtliche Handhabung zu gewährleisten, weist die Auswerteschaltung vorteilhafterweise eine mikroprozessorgestützte oder computergestützte Auswerteeinheit mit einem Programm zur Berechnung, Anzeige und/oder Einstellung des zur Nennpreßkraft unter Berücksichtigung der aufgenommenen Eichkurve gehörenden Spannwegs auf.

Im folgenden wird die Erfindung anhand der Zeichnung näher erläutert. Es zeigen

Fig. 1　　einen senkrechten Schnitt durch eine Stopfbuchse;

Fig. 2　　eine Meßanordnung zur Aufnahme eines Kraft-Weg-Diagramms der Stopfbuchse und zur Bestimmung des Nennspannwegs;

Fig. 3　　ein Kraft-Weg-Diagramm.

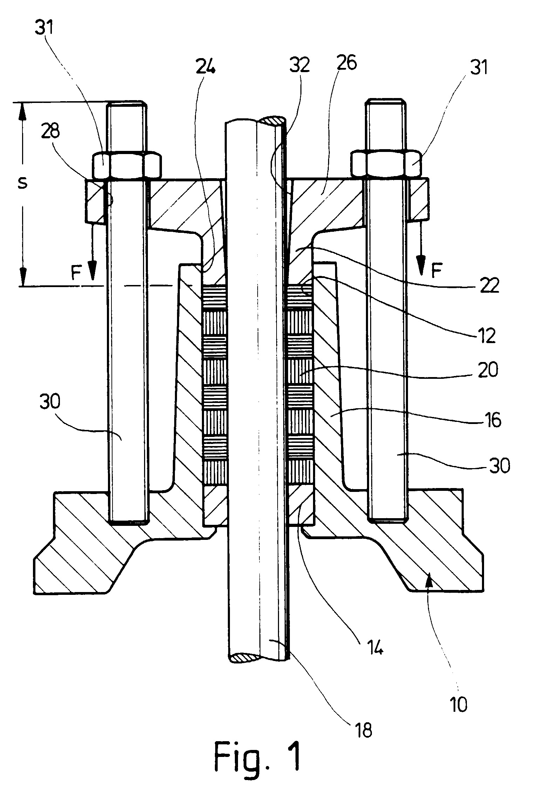

Die in Fig. 1 gezeigte Stopfbuchse besteht im wesentlichen aus einem Gehäuse 10 mit einer Stopfbuchskammer 12, die einen Kammerboden 14 und eine zylindrische Kammerwandung 16 aufweist, einer die Stopfbuchskammer 12 und den Kammerboden 14 zentral durchsetzenden Spindel 18, einer in der Stopfbuchskammer 12 im Ringraum zwischen der Spindel 18 und der Kammerwandung 16 angeordneten Stopfbuchspackung 20, einer mit einem Druckstück 22 durch die stirnseitige Öffnung 24 in die Kammer 12 eingreifenden und dort gegen die Stopfbuchspackung anliegenden Stopfbuchsbrille 26 und mehreren mit dem Kammergehäuse 10 verschiebefest verbundenen, durch Bohrungen 28 der Stopfbuchsbrille mit Spiel hindurchgreifenden Spannschrauben 30, auf denen gegen die Stopfbuchsbrille unter Ausübung einer Preßkraft auf die Packung 20 anziehbare Spannmuttern 31 geführt sind. Das Druckstück 26 weist außerdem einen Durchbruch 32 für den Durchgriff der Spindel 18 auf. Die über die Spannmuttern 31 und die Stopfbuchsbrille 26 ausgeübte Preßkraft F ist so zu wählen, daß die zwischen dem Druckstück 22 und dem Kammerboden 14 eingespannte Stopfbuchspackung 20 mit einer ausreichenden radialen Dichtkraft gegen die Spindeloberfläche angepreßt wird und die Spindel dennoch die gewünschte Beweglichkeit aufweist.

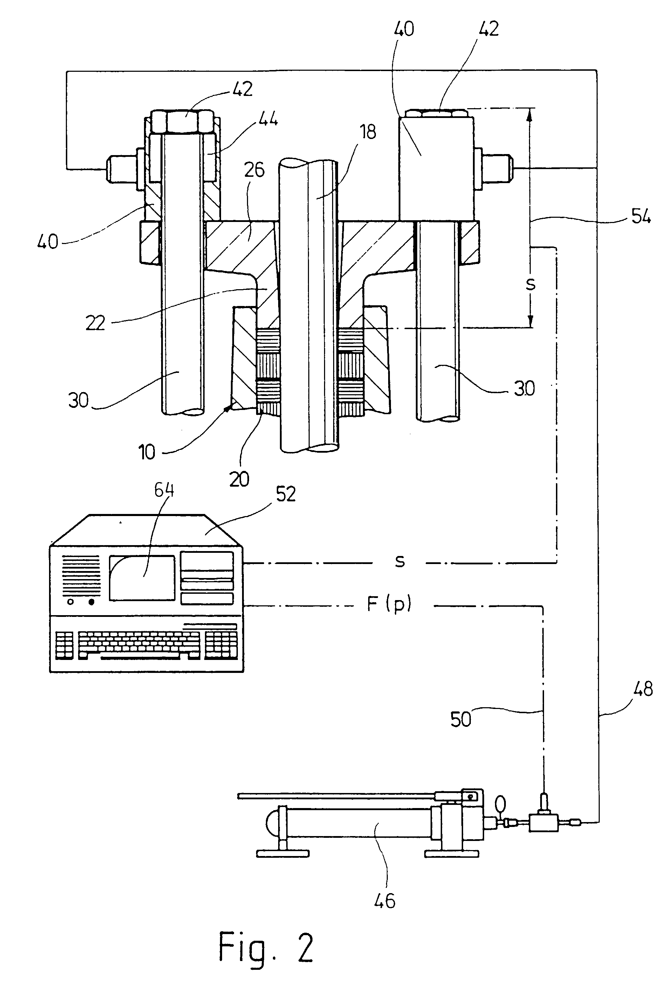

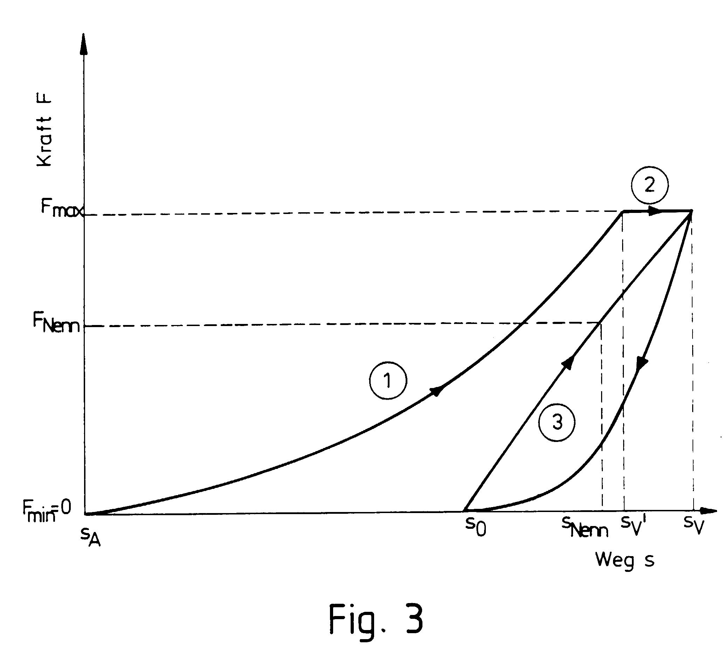

Zur Vorbereitung einer definierten Verspannung der Stopfbuchspackung 20 wird die in Fig. 2 gezeigte Meßanordnung eingesetzt. Die Spannmuttern 31 werden hierbei ersetzt durch eine Spannhülse 40 und eine auf das freie Ende der Spannschraube 30 aufgedrehte, in das Innere der Spannhülse 40 dichtend eingreifende Kolbenmutter 42. Die Spannhülse 40 ist koaxial zur Spannschraube 30 angeordnet und axial zu dieser verschiebbar. Sie sitzt mit ihrer nach unten weisenden Stirnfläche auf der Stopfbuchsbrille 26 auf. Der Ringraum der Spannhülsen 40 ist über einen Hydrozylinder 46 oder eine Hydraulikpumpe und eine gemeinsame Hydraulikleitung 48 mit Drucköl beaufschlagbar. Auf diese Weise wird die Stopfbuchspackung 20 über die Spannhülsen 40 und die Stopfbuchsbrille 26 mit einer Preßkraft F beaufschlagt, die abhängig vom Hydraulikdruck p in der Leitung 48 ist und über die Abzweigleitung 50 in einer computergestützten Auswerteeinheit 52 gemessen und kontinuierlich registriert werden kann. Gleichzeitig kann über einen symbolisch dargestellten Wegaufnehmer 54 der Spannweg s in Abhängigkeit von der Preßkraft F direkt oder indirekt gemessen und in der Meßschaltung 52 registriert werden. Auf diese Weise kann ein Kraft-Weg-Diagramm aufgenommen, registriert und an einem Bildschirm 64 dargestellt werden, wie es in Fig. 3 dargestellt ist.

Da beim Einsetzen der Stopfbuchspackung 20 in die Stopfbuchskammer 12 Lufträume vorhanden sind, muß die Stopfbuchspackung 20 zunächst hinsichtlich ihrer Form an die Kammer 12 und die Spindel 18 angepaßt und in sich verdichtet werden, um eine optimale Dichtkraft zu erzeugen. Dies erfolgt dadurch, daß nach dem Einführen der Stopfbuchspackung 20 über die Stopfbuchsbrille 26 eine Vorpressung von der Kraft $F_{min}$ = 0 bis zu einer vorgegebenen Maximalpreßkraft $F_{max}$ vorgenommen wird. Gemäß dem in Fig. 3 gezeigten Kraft-Weg-Diagramm durchläuft das Druckstück 22 dabei einen Verschiebeweg s entlang dem Kurvenzweig 1 von der Position $s_A$ bis zu einer Position $s_V'$. Dabei erleidet die Stopfbuchspackung eine plastische Verformung. Die Maximalpreßkraft $F_{max}$ wird dann noch über eine Zeit lang aufrechterhalten, bis die Setzvorgänge vollständig abgeklungen sind (Kurvenzweig 2). Der Spannweg vergrößert sich hierbei noch bis zum Wert $s_V$.

Anschließend wird die Preßkraft F mehrfach zwischen dem Wert $F_{max}$ und $F_{min}$ = 0 variiert und gleichzeitig der Spannweg s aufgenommen. Dabei erhält man eine reproduzierbare Kennlinie 3, die einen nichtlinearen absteigenden und einen annähernd linearen ansteigenden Zweig nach Art einer Hysterese aufweist, die sich über den Spannweg $s_0$ bis $s_V$ erstreckt. Ziel dieses Meßvorgangs ist die Aufnahme einer Eichkurve, die durch den ansteigenden Zweig der Kurve 3 des Kraft-Weg-Diagramms gebildet ist.

Die Verspannung der Stopfbuchse erfolgt nun dadurch, daß nach Entfernen der für die Vermessung angekoppelten Spannhülsen 40 wieder die Spannmuttern 31 auf die Spannschrauben 30 aufgedreht werden (Fig. 1). Durch eine einfache Spannwegmessung kann nun über die zuvor aufgenommene Eichkurve ein vorgegebener Nennpreßdruck $F_{Nenn}$ eingestellt werden. Der zugehörige Spannweg $s_{Nenn}$ wird dabei beispielsweise durch die Auswerteeinheit 52 als Zahlenwert aus der einzustellenden Nennpreßkraft errechnet und angezeigt. Die Verstellung der Spannmuttern 31 kann entweder von Hand oder motorisch erfolgen.

Zusammenfassend ist folgendes festzustellen: Die Erfindung bezieht sich auf ein Verfahren und eine Vorrichtung zum kontrollierten Verspannen einer Stopfbuchse 12,20,22. Erfindungsgemäß erfolgt dies dadurch, daß die Stopfbuchspackung 20 zur Erstverdichtung mit einer vorgegebenen Maximalpreßkraft beaufschlagt wird, daß die Preßkraft F sodann mehrfach zwischen der Maximalpreßkraft und einer vorgegebenen Minimalpreßkraft variiert wird und daß die Packung abschließend unter einer vorgegebenen Nennpreßkraft komprimiert und in diesem Zustand in der Kammer 12 eingespannt wird. Während der Variation der Preßkraft F wird der zugehörige Spannweg s der Packung 20 gemessen und unter Bildung eines Kraft-Weg-Diagramms als Eichkurve registriert. Die Nennpreßkraft kann dann durch Kompression der Packung anhand der Eichkurve durch Messung des Spannwegs eingestellt werden.

## Patentansprüche

1. Verfahren zum kontrollierten Verspannen einer in einer einseitig offenen, durch einen Kammerboden (14) und eine vorzugsweise zylindrische Kammerwandung (16) begrenzten, vorzugsweise von einer Spindel (18) axial durchdrungenen Kammer (12) angeordneten, von der Öffnungsseite (24) her in Richtung Kammerboden (14) mit einer axialen Preßkraft (F) beaufschlagbaren und dabei entlang einem Spannweg (s) komprimierbaren und gegen den Kammerboden (14), die Kammerwandung (16) und gegebenenfalls die Spindeloberfläche (18) dichtend andrückbaren Stopfbuchs-oder Dichtungspackung (20), **dadurch gekennzeichnet,** daß die Packung (20) zur Erstverdichtung mit einer vorgegebenen Maximalpreßkraft ($F_{max}$) beaufschlagt wird, daß die Maximalpreßkraft ($F_{max}$) während einer vorgegebenen Haltezeit aufrechterhalten wird, daß die Preßkraft (F) sodann mehrfach zwischen der Maximalpreßkraft ($F_{max}$) und einer vorgegebenen Minimalpreßkraft ($F_{min}$) variiert wird, daß während der Variation der Preßkraft (F) der zugehörige Spannweg (s) der Packung (20) gemessen und registriert wird, und daß die Packung (20) abschließend unter einer vorgegebenen Nennpreßkraft ($F_{Nenn}$), die kleiner als die Maximalpreßkraft und größer als die Minimalpreßkraft ist und die durch Kompression der Packung (20) auf dem zugehörigen Spannweg ($s_{Nenn}$) eingestellt wird, komprimiert und in diesem Zustand in der Kammer (12) eingespannt wird.

2. Verfahren nach Anspruch 1, **dadurch gekennzeichnet,** daß die Nennpreßkraft ($F_{Nenn}$) durch Erhöhung der Preßkraft (F) von der Minimalpreßkraft ($F_{min}$) aus eingestellt wird.

3. Verfahren nach Anspruch 1 oder 2, **dadurch gekennzeichnet,** daß die Minimalpreßkraft ($F_{min}$) gleich Null ist.

4. Verfahren nach einem der Ansprüche 1 bis 3, **dadurch gekennzeichnet,** daß die Maximalpreßkraft beim 1,3-bis 2,5-fachen, vorzugsweise beim 1,5- bis 2-fachen der einzustellenden Nennpreßkraft ($F_{Nenn}$) gewählt wird.

5. Verfahren nach einem der Ansprüche 1 bis 4, **dadurch gekennzeichnet,** daß während der Variation der Preßkraft (F) der zugehörige Spannweg (s) der Packung (20) unter Bildung eines Kraft-Weg-Diagramms als Eichkurve registriert wird, und daß die Nennpreßkraft ($F_{Nenn}$) anhand der Eichkurve eingestellt wird.

6. Verfahren nach Anspruch 5, **dadurch gekennzeichnet,** daß der Spannweg (s) bei zunehmender Kompression der Packung (20) auf den der Nennpreßkraft ($F_{Nenn}$) entsprechenden Wert ($s_{Nenn}$) eingestellt wird.

7. Verfahren nach einem der Ansprüche 1 bis 6, **dadurch gekennzeichnet,** daß die Preßkraft (F) zur Bestimmung der Eichkurve mit hydraulischen Mitteln auf die Packung (20) ausgeübt und gemessen wird.

8. Vorrichtung zum kontrollierten Verspannen einer in einer einseitig offenen, durch einen Kammerboden (14) und eine vorzugsweise zylindrische Kammerwandung (16) begrenzten, vorzugsweise von einer Spindel (18) axial durchdrungenen Kammer (12) angeordneten, von der Öffnungsseite (24) her über ein Druckstück (22) mit einer axialen Preßkraft beaufschlagbaren und dabei entlang einem Spannweg (s) komprimierbaren und gegen das Kammerinnere und gegebenenfalls die Spindeloberfläche (18) dichtend andrückbaren Stopfbuchs-oder Dichtungspackung (20), **dadurch gekennzeichnet**, daß das Druckstück (22) gegenüber dem kammerseitigen Gehäuse (10) mit zeitweilig ankoppelbaren hydraulischen Mitteln unter Aufbau einer Preßkraft (F) in der Packung verschiebbar ist, daß ein Druck- oder Kraftsensor zur Bestimmung der Preßkraft (F) und ein Wegaufnehmer zur Bestimmung des Spannwegs (s) des Druckstücks (22) gegenüber dem Kammergehäuse (10,30) vorgesehen ist, und daß der Druck- oder Kraftsensor und der Wegaufnehmer ausgangsseitig an eine Auswerteschaltung zur Bildung eines Kraft-Weg-Diagramms als Eichkurve für die Einstellung einer Nennpreßkraft ($F_{Nenn}$) über den zugehörigen Spannweg ($s_{Nenn}$) des Druckstücks (22) angeschlossen sind.

9. Vorrichtung nach Anspruch 8, **dadurch gekennzeichnet,** daß das Druckstück (22) mittels mindestens zweier zwischen Druckstück (22) und kammerseitigem Gehäuse (10) angeordneter Spannorgane (30,31) mit der Preßkraft (F) beaufschlagt ist, und daß die hydraulischen Mittel an die Spannorgane (30) und das Druckstück (22) ankoppelbar sind.

10. Vorrichtung nach Anspruch 9, **dadurch gekennzeichnet,** daß die hydraulischen Mittel je eine auf die freien Enden der Spannschrauben (30) aufschiebbare, gegen das Druckstück (22) anpreßbare Spannhülse (40) und einen mit der Spannschraube lösbar verbindbaren, in eine mit Drucköl beaufschlagbare Druckkammer (44) der Spannhülse (40) druckdicht eingreifenden Kolben (42) aufweisen.

11. Vorrichtung nach Anspruch 10, **dadurch gekennzeichnet,** daß die gehäusefesten Spannschrauben (30) vorzugsweise motorisch gegen das Druckstück (22) andrückbare Spannmuttern (31) tragen.

12. Vorrichtung nach Anspruch 11, **dadurch gekennzeichnet,** daß die Spannhülsen (40) anstelle der Spannmuttern (31) oder mit aufgedrehten Spannmuttern (31) auf die Spannschrauben (30) aufschiebbar und gegen das Druckstück (22) anpreßbar sind.

13. Vorrichtung nach einem der Ansprüche 8 bis 12, **dadurch gekennzeichnet,** daß das Druckstück (22) durch eine Stopfbuchsbrille (26) gebildet oder an dieser angeordnet ist und einen zentralen Durchbruch (32) für die Spindel (18) aufweist.

14. Vorrichtung nach einem der Ansprüche 8 bis 13, **dadurch gekennzeichnet,** daß die Auswerteschaltung eine mikroprozessorgestützte oder computergestützte Auswerteeinheit (52) mit einem Programm zur Berechnung, Anzeige und/oder Einstellung des zur Nennpreßkraft ($F_{Nenn}$) unter Berücksichtigung der Eichkurve gehörenden Spannwegs ($s_{Nenn}$) aufweist.

**Claims**

1. Process for the controlled prestressing of a stuffing-box or seal packing (20) where the seal packing is arranged in a chamber (12) open on one side and bounded by a chamber bottom (14) and a preferably cylindrical chamber wall (16), is preferably traversed axially by a spindle (18), is actable upon with an axial pressure force (F) from the opening side in the direction of the chamber bottom (14) and compressible along a spanning path (s) (9), and is pressable with sealing effect against the chamber bottom (14), the chamber wall (16) and possibly the stuffing-box or seal packing (20), **characterized in that** the packing (20) is acted upon with a given maximal pressure force ($F_{max}$) for the preliminary compression, that the maximal pressure force ($F_{max}$) is maintained for a given holding time, that the pressure force (F) is varied a number of times between the maximal pressure force ($F_{max}$) and a given minimal pressure force ($F_{min}$), that during the variation of the pressure force (F), the respective spanning path (s) of the packing (20) is measured and registered, and that the packing is finally compressed under a given nominal pressure force ($F_{Nom}$) and in this state is clamped in the chamber (12), the nominal pressure force ($F_{Nom}$) being less than the maximal pressure force and greater than the minimal pressure force and set by compression of the packing (20) on the respective spanning path ($S_{Nom}$).

2. Process according to Claim 1, **characterized in that** the nominal pressure force ($F_{Nom}$) is set by raising the pressure force (F) from the minimal pressure force ($F_{min}$).

3. Process according to Claim 1 or 2, **characterized in that** the minimal pressure force ($F_{min}$) is equal to zero.

4. Process according to any of claims 1 to 3, **characterized in that** the maximal pressure force is chosen at 1.3 to 2.5 times, preferably at 1.5 to 2 times the nominal pressure force ($F_{Nom}$) to be set.

5. Process according to any of Claims 1 to 4, **characterized in that** during the variation of the pressure force (F), the respective spanning path (s) of the packing (20) is registered for formation of a force-path diagram as a calibrating curve, and that the nominal pressure force ($F_{Nom}$) is set with the aid of the calibrating curve.

6. Process according to Claim 5, **characterized in that** with increasing compression of the packing (20), the spanning path (s) is set to the value ($s_{Nom}$) corresponding to the nominal pressure force ($F_{Nom}$).

7. Process according to any of Claims 1 to 6, **characterized in that** the pressure force (F) for the determination of the calibrating curve is exerted with hydraulic means on the packing (20) and measured.

8. Device for the controlled prestressing of a stuffing-box or seal packing (20) where the stuffing box is open on one side and bounded by a chamber bottom (14) and a preferably cylindrical chamber wall (16), and the packing is preferably traversed axially by a spindle (18), compressible from the opening side (24) by a thrust piece (22) actable-upon with an axial pressure force and compressible along a spanning path (s) and is pressable with sealing effect against the chamber interior and possibly the spindle surface (18), **characterized in that** the thrust piece (22) is slidable with respect to the chamber-side housing (10) with intermittently coupleable hydraulic means upon a buildup of a pressure force (F) in the packing, that a pressure- or force-sensor is provided for the determination of the pressure force (F) and a path recorder is provided for the determination of the spanning path (s) of the thrust piece (22) with respect to the chamber opening (10, 30), and that the pressure-or force-sensor and the path recorder are connected on the output-side to an evaluating circuit for the formation of a force-path diagram as a calibrating curve for the setting of a nominal pressure ($F_{Nom}$) over the respective spanning path ($s_{Nom}$) of the thrust piece (22).

9. Device according to Claim 8, **characterized in that** the thrust piece (22) is acted upon by the pressure force (F) by means of at least two spanning members (30, 31) arranged between thrust piece (22) and chamber-side housing (10), and that the hydraulic means are coupleable to the spanning members (30) and the thrust piece (22).

10. Device according to Claim 9, **characterized in that** the hydraulic means have in each case a spanning sleeve (40) thrustable onto the free ends of the spanning screws (30) and pressable against the thrust piece (22), and a piston (42) detachably connectable with the spanning screw and engaging pressure-tight into a pressure chamber (44) of the spanning sleeve (40) which is actable-upon with pressure oil.

11. Device according to Claim 10, **characterized in that** the housing-fast spanning screws (30) carry spanning nuts (31) preferably pressable against the thrust piece (22) by a motor.

12. Device according to Claim 11, **characterized in that** the spanning sleeves (40) are slidable onto the spanning screws (30) instead of the spanning nuts (31) or with turned-on spanning nuts (31) and are pressable against the thrust piece (22).

13. Device according to any of Claims 8 to 12, **characterized in that** the thrust piece (22) either is formed by a stuffing-box gland (26) or is arranged on this gland and has a central opening (32) for the spindle (18).

14. Device according to any of Claims 8 to 13, **characterized in that** the evaluating circuit has a microprocessor-supported or computer-supported evaluating unit (52) with a program for the calculation, display and/or adjustment of the spanning path ($s_{Nom}$) corresponding to the nominal pressure force ($F_{Nom}$) of the calibrating curve under consideration.

**Revendications**

1. Procédé de compression contrôlée d'une garniture de presse-étoupe ou d'étanchéité (20) disposée dans une chambre (12) ouverte sur un côté, délimitée par un fond de chambre (14) et une paroi de chambre (16) de préférence de forme cylindrique et de préférence traversée axialement par une broche (18), qui peut être sollicitée à partir du côté ouverture (24), en direction du fond de chambre (14), par une force de compression axiale (F), comprimée le long d'une distance de compression (s) et appliquée de manière étanche contre le fond de chambre (14), la paroi de chambre (16) et éventuellement la surface de la broche (18), **caractérisé en ce** que, pour la première compression, la garniture (20) est sollicitée avec une force de compression maximale

($F_{max}$) prédéterminée, que la force de compression maximale ($F_{max}$) est maintenue pendant un temps de maintien prédéterminé, que la force de compression (F) est ensuite variée à plusieurs reprises entre la force de compression maximale ($F_{max}$) et une force de compression minimale ($F_{min}$), que pendant la variation de la force de compression (F), la distance de compression (s) de la garniture (20) est mesurée et enregistrée, et que, pour terminer, la garniture (20) est comprimée sous une force de compression nominale ($F_{nom}$) inférieure à la force de compression maximale et supérieure à la force de compression minimale qui est réglée par compression de la garniture (20) sur la distance de compression ($s_{nom}$) associée, et enserrée dans cet état dans la chambre (12).

2. Procédé selon la revendication 1, caractérisé en ce que la force de compression nominale ($F_{nom}$) est réglée par augmentation de la force de compression (F) à partir de la force de compression minimale ($F_{min}$).

3. Procédé selon la revendication 1 ou 2, caractérisé en ce que la force de compression minimale ($F_{min}$) est nulle.

4. Procédé selon l'une des revendications 1 à 3, caractérisé en ce que la force de compression maximale est choisie entre 1,3 à 2,5 fois, de préférence entre 1,5 et 2 fois, la force de compression nominale ($F_{nom}$) à régler.

5. Procédé selon l'une des revendications 1 à 4, caractérisé en ce que pendant la variation de la force de compression (F), la distance de compression (s) associée de la garniture (20) est enregistrée, avec formation d'un diagramme de force-distance, comme courbe d'étalonnage, et que la force de compression nominale ($F_{nom}$) est réglée à l'aide de la courbe d'étalonnage.

6. Procédé selon la revendication 5, caractérisé en ce que la distance de compression (s) est réglée, avec compression croissante de la garniture (20), sur la valeur ($s_{nom}$) qui correspond à la force de compression nominale ($F_{nom}$).

7. Procédé selon l'une des revendications 1 à 6, caractérisé en ce que pour la détermination de la courbe d'étalonnage, la force de compression (F) est exercée sur la garniture (20) avec des moyens hydrauliques, et mesurée.

8. Dispositif de compression contrôlée d'une garniture de presse-étoupe ou d'étanchéité (20) disposée dans une chambre (12) ouverte sur un côté, délimitée par un fond de chambre (14) et une paroi de chambre (16), de préférence de forme cylindrique, et de préférence traversée axialement par une broche (18), qui peut être sollicitée à partir du côté ouverture (24), par l'intermédiaire d'un membre de pression (22), avec une force de compression axiale, comprimée le long d'une distance de compression (s) et appliquée de manière étanche contre l'intérieur de la chambre et éventuellement la surface de la broche (18), **caractérisé en ce** que le membre de pression (22) peut être déplacé par rapport au boîtier (10) situé du côté chambre avec des moyens hydrauliques pouvant être accouplés temporairement, avec établissement d'une force de compression (F) dans la garniture, qu'il est prévu un détecteur de pression ou de force pour la détermination de la force de compression (F) et un capteur de déplacement pour la détermination de la distance de compression (s) du membre de pression (22) par l'intermédiaire au boîtier de chambre (10, 30), et que le détecteur de pression ou de force et le capteur de déplacement sont reliés du côté sortie à un circuit d'interprétation pour l'établissement d'un diagramme de force-distance comme courbe d'étalonnage pour le réglage d'une force de compression nominale ($F_{nom}$) en fonction de la distance de compression ($s_{nom}$) associée du membre de pression (22).

9. Dispositif selon la revendication 8, caractérisé en ce que le membre de pression (22) est sollicité par la force de compression (F) au moyen d'au moins deux organes de serrage (30, 31) disposés entre le membre de pression (22) et le boîtier (10) situé du côté chambre, et que les moyens hydrauliques peuvent être couplés avec les organes de serrage (30) et le membre de pression (22).

10. Dispositif selon la revendication 9, caractérisé en ce que les moyens hydrauliques comprennent chacun une douille de serrage (40) pouvant être engagée sur les extrémités libres des boulons de serrage (30) et bloquée contre le membre de pression (22), ainsi qu'un piston (42) qui peut être couplé de manière amovible avec le boulon de serrage et s'engage de manière étanche dans une chambre de compression (44) de la douille de serrage (40), qui peut être alimentée en huile sous pression.

11. Dispositif selon la revendication 10, caractérisé en ce que les boulons de serrage (30) solidaires du boîtier portent des écrous de serrage (31) qui peuvent être bloqués, de préférence de manière motorisée, contre le membre de pression (22).

12. Dispositif selon la revendication 11, caractérisé en ce que les douilles de serrage (40) peuvent être engagées à la place des écrous de serrage (31) ou, lorsque les écrous de serrage (31) sont vissés, sur les boulons de serrage (30) et appliquées contre le membre de pression (22).

13. Dispositif selon l'une des revendications 8 à 12, caractérisé en ce que le membre de pression (22) est constitué par une bride (26) ou monté sur celle-ci et présente un percement central (32) pour la broche (18).

14. Dispositif selon l'une des revendications 8 à 13, caractérisé en ce que le circuit d'interprétation comprend une unité d'interprétation (52) assistée par microprocesseur ou par ordinateur avec un programme pour le calcul, l'affichage et/ou le réglage de la distance de compression ($s_{nom}$) associée à la force de compression nominale ($F_{nom}$), en tenant compte de la courbe d'étalonnage.

Fig. 1

Fig. 2

Fig. 3